# EUROPÄISCHE PATENTSCHRIFT

(11) **EP 1 431 560 B1**
(45) Veröffentlichungstag und Bekanntmachung des Hinweises auf die Patenterteilung: **22.02.2006**
(21) Anmeldenummer: 03027062.3
(22) Anmeldetag: 25.11.2003
(51) Int. Cl.: F02F 1/42, F02B 31/04

(54) **Trennblech für einen Gaswechselkanal einer Brennkraftmaschine und Verfahren zur Herstellung**
Partition plate for a gas exchange port of an internal combustion engine and method for producing
Plat de séparation pour un orifice de changement des gaz d'un moteur à combustion interne et la méthode pour la production

(30) Priorität: 19.12.2002 DE 10260041
(43) Veröffentlichungstag der Anmeldung: 23.06.2004
(73) Patentinhaber: Volkswagen Aktiengesellschaft, 38436 Wolfsburg (DE)
(72) Erfinder: Sven, Adolf, 38102 Braunschweig (DE)

(56) Entgegenhaltungen:
- DE-A- 19 803 867
- GB-A- 2 306 195
- US-A1- 2002 020 389
- US-A1- 2002 078 921

## Beschreibung

Die Erfindung betrifft ein Trennblech für einen Gaswechselkanal eines Zylinderkopfes einer Brennkraftmaschine mit beidseitig angeordneten Positionierhilfen. Weiterhin betrifft die Erfindung ein Verfahren zur Herstellung eines Zylinderkopfes mit dem erfindungsgemäßen Trennblech.

Ein solches Trennblech wird in der Praxis eingesetzt, um insbesondere bei der Benzindirekteinspritzung die beiden Betriebsarten Schichtladungsbetrieb und Homogenbetrieb realisieren und damit die Kraftstoffmenge optimal an die Drehmoment- und Leistungsanforderungen der Brennkraftmaschine anpassen zu können.

Die Brennkraftmaschine läuft bis in die mittleren Last- und Drehzahlbereiche im Schichtladungsbetrieb, wobei der Kraftstoff erst zum Ende des Verdichtungstaktes eingespritzt wird. Dadurch bildet sich zum Zeitpunkt der Zündung eine geschichtete Aufteilung des Kraftstoffes im Brennraum der Brennkraftmaschine. Die innere Schicht im Bereich der Zündkerze besteht aus einem zündfähigen Gemisch, während die äußere Schicht beispielsweise aus angesaugter Luft und zugeführten Abgasen besteht. Im oberen Last- und Drehzahlbereich wird in den Homogenbetrieb umgeschaltet. Dabei wird der Kraftstoff während des Ansaugtaktes direkt in den Zylinder eingespritzt und vermischt sich dort homogen mit der Ansaugluft im gesamten Zylinder.

Um die beiden Betriebsarten realisieren zu können, ist zusätzlich zu der Drosselklappe eine Saugrohrlclappe vorgesehen, durch die ein unterer, mittels des Trennbleches von dem Gaswechselkanal abgeteilter Kanal im Schichtladungsbetrieb verschlossen werden kann. Dadurch strömt die Ansaugluft nur über einen oberen Kanal und wird aufgrund des verminderten Kanalquerschnitts beschleunigt. Außerdem ist der obere Kanal so gestaltet, dass die Ansaugluft walzenförmig in den Zylinder einströmt. Diese walzenförmige Luftströmung kann im Zylinder durch die besondere Form des Kolbenbodens verstärkt werden. Im Homogenbetrieb bei höheren Lasten wird die Saugrohrklappe nicht betätigt, so dass beide Kanäle geöffnet sind. Durch den größeren Gesamtquerschnitt des Gaswechselkanals kann die Brennkraftmaschine die erforderliche Luftmasse für ein hohes Motordrehmoment ansaugen.

Ein Trennblech und ein Verfahren zur Herstellung eines Zylinderkopfes der genannten Art sind beispielsweise Gegenstand der DE 198 03 867 A1, die bereits die Herstellung des Zylinderkopfes einer Brennkraftmaschine im Kokillenguss beschreibt. Dabei werden Sandkerne zur Ausbildung entsprechender Gaswechselkanäle eingesetzt, wobei bei wenigstens einem Gaswechselkanal ein Trennblech angeordnet ist. Hierzu wird das Trennblech in dem Sandkern des entsprechenden Gaswechselkanals angeordnet bzw. eingebacken. Das dabei verwendete Trennblech weist seitliche Fahnen als Positionierhilfen zur Montageerleichterung und -verankerung im Gussmaterial auf. Dadurch wird es möglich, das Trennblech in einen Sandkern für einen Gaswechselkanal beim Kokillengussverfahren zu integrieren, wodurch das Trennblech gleichzeitig mit der Herstellung des Zylinderkopfes in dem entsprechenden Gaswechselkanal ausgebildet und mittels der Positionierhilfen fest in der Wandung des Gaswechselkanals verankert wird.

Durch die DE 199 60 626 A 1 ist auch eine Brennkraftmaschine mit einem Trennblech für einen Gaswechselkanal des Zylinderkopfes bekannt, welches zumindest über eine Teillänge verläuft und eine in Strömungsrichtung verlaufende rinnenförmige Profilierung aufweist. Eine solche Formgebung hat den Vorteil, dass das Trennblech als gesondertes Bauteil gemeinsam mit dem Gießkern in die Form eingelegt und fest in einen den Gaswechselkanal bildenden Teil des Zylinderkopfes eingegossen wird, wobei unterschiedliche Wärmedehnungen des Zylinderkopfmaterials, beispielsweise Aluminium, einerseits und des Trennblechmaterials, beispielsweise ein wärmebeständiges Stahlblech andererseits, problemlos aufgenommen werden können.

Weiterhin offenbart die WO 95/17589 A1 eine Brennkraftmaschine mit richtungsänderbarer Einströmung des Kraftstoffluftgemisches. Die Brennkraftmaschine hat hierzu einen Gaswechselkanal für das Kraftstoffluftgemisch, der mit Mitteln in Verbindung steht, die eine steuerbare Ablenkung der Strömung ermöglichen. Es ist dabei vorgesehen, dass der Gaswechselkanal in einen ersten und einen zweiten Teilkanal unterteilt ist. Die Trennwand kann bei der Herstellung des Zylinderkopfes bereits eingegossen werden, wobei die Trennwand sowohl aus dem Gussmaterial als auch durch ein entsprechend in die Gussform eingelegtes Bauelement aus einem anderen Material, das fest in den Zylinderkopf eingegossen wird, bestehen kann. Die Trennwand kann im Bereich der Einlass Öffnung mit einer Bimetallfahne ausgestattet sein, die bei kaltem Motor den Strömungsquerschnitt des zweiten Teilkanals zumindest teilweise verschließt und bei zunehmender Erwärmung freigibt. Die Trennwand kann zusätzlich auch beheizbar ausgeführt sein.

Ferner sind Trennbleche auch durch die US 59 15 354 A sowie die JP 62-050 064 A offenbart.

Als problematisch hat sich bei allen bisher bekannten Trennblechen der genannten Art bei der Herstellung des damit ausgestatteten Zylinderkopfes die umständliche Positionierung erwiesen. Dabei wirken sich bereits geringe Toleranzen in der Praxis nachteilig aus, weil dadurch die Strömungsverhältnisse der verschiedenen Zylinder voneinander abweichen können und damit Fehler des Motormanagementes auftreten können.

Vor diesem Hintergrund liegt der Erfindung die Aufgabe zugrunde, ein Trennblech der eingangs genannten Art derart auszuführen, dass dadurch die Positionierung wesentlich vereinfacht wird. Insbesondere sollen dabei Toleranzmaße reduziert und der Betrieb der mit dem Trennblech ausgestatteten Brennkraftmaschine optimiert werden. Weiterhin soll ein Verfahren zur Herstellung eines mit dem erfindungsgemäßen Trennblech ausgestatteten Zylinderkopfes geschaffen werden.

Die erstgenannte Aufgabe wird gelöst mit einem Trennblech gemäß den Merkmalen des Patentanspruchs 1. Die Unteransprüche 2 bis 6 betreffen besonders zweckmäßige Weiterbildungen des erfindungsgemäßen Trennbleches.

Erfindungsgemäß ist also ein Trennblech vorgesehen, bei dem die Positionierhilfen einen Verformungsabschnitt zur kraftschlüssigen Fixierung zwischen jeweils zugeordneten Anschlägen einer Gussform aufweisen. Durch die beidseitig einander gegenüberliegenden Verformungsabschnitte wird eine spielfreie Fixierung des Trennbleches zwischen den der Gussform zugeordneten Anschlägen erreicht, so dass dieses bei dem nachfolgenden Gießprozess zuverlässig in der vorbestimmten Position gehalten ist. Zugleich sind die Verformungskräfte derart bemessen, dass der Verformungsvorgang, insbesondere durch eine Druckkraft senkrecht zur Trennblechebene, zu einer Zentrierung zwischen den Anschlägen führt. Die Positionierung kann daher mit geringem Aufwand wesentlich vereinfacht werden, wobei Toleranzmaße bei dem so realisierten Zylinderkopf reduziert sind und der Betrieb der Brennkraftmaschine daher wesentlich optimiert ist.

Der Verformungsabschnitt könnte beispielsweise durch eine Abwinkelung oder einen Abschnitt des Trennbleches mit einer geringeren Materialstärke realisiert sein. Besonders vorteilhaft ist hingegen eine Ausführungsform der vorliegenden Erfindung, bei welcher der Verformungsabschnitt eine Durchbrechung aufweist. Die Verformung erfolgt dabei im Bereich eines die Durchbrechung außenseitig einfassenden Steges, so dass die Verformungskräfte wesentlich durch die verbleibende Materialstärke des Steges vorbestimmbar sind. Die Verformungskräfte und damit die Fixierkräfte können auf diese Weise problemlos an unterschiedliche Anforderungen angepasst werden.

Dabei erweist es sich als besonders hilfreich, wenn die Durchbrechung als Langloch ausgeführt ist. Hierdurch führt eine einseitige Verlagerung des Anschlages in Richtung der Trennblechebene nicht zu einer Veränderung der Verformungskräfte, sondem diese bleiben weitgehend unbeeinflusst. Die Verformbarkeit kann zudem mit geringem Aufwand wesentlich verbessert werden.

Die Verformungsabschnitte könnten plastisch verformbar ausgestaltet sein. Besonders praxisnah ist hingegen eine Abwandlung der vorliegenden Erfindung, bei welcher der Verformungsabschnitt elastisch verformbar ist. Hierdurch entstehen an den gegenüberliegenden Verformungsabschnitten Fixierkräfte, die sich gegenseitig aufheben und die bei einem übereinstimmenden Verformungsgrad zu einer zuverlässigen Fixierung zwischen den Anschlägen führen. Die Fixierung während des nachfolgenden Gießprozesses kann dadurch verbessert werden. Zudem können die Verformungseigenschaften der gegenüberliegenden Verformungsabschnitte derart gewählt werden, dass resultierende Kraftkomponenten zugleich zu einer Fixierung des Trennbleches in Längsrichtung führen.

Als besonders zuverlässig erweist sich auch eine Ausgestaltung der Erfindung, bei welcher der Verformungsabschnitt gegen einen äußeren Umfang des Anschlages flächig anlegbar ist. Hierdurch können zugleich hohe Fixierkräfte übertragen und ein Abgleiten der Verformungsabschnitte von dem jeweiligen Anschlag vermieden werden. Zugleich ist durch die flächige Verformung ein Formschluss zwischen dem Verformungsabschnitt und dem Anschlag realisierbar, wodurch die Fixierung zusätzlich verbessert wird.

Weiterhin erweist es sich als besonders günstig, wenn der Verformungsabschnitt gegenüber einer Anlagekante des Trennbleches geneigt angeordnet ist, um so zugleich eine Zentrierung des Trennbleches in der Mittelachse und eine spielfreie Anlage der beiden oberen Anlagekanten zu erreichen.

Die zweitgenannte Aufgabe, ein Verfahren zur Herstellung eines Zylinderkopfes einer Brennkraftmaschine mittels eines Gießverfahrens zu schaffen, wobei ein einen Gaskanal unterteilendes Trennblech in die Gussform eingelegt und mit dem Zylinderkopf durch Eingießen verbunden wird, ist erfindungsgemäß gelöst indem das Trennblech beim Schließen der Gussform in eine gewünschte Position zwischen zwei Anschlägen bewegt wird, derart, dass ein Verformungsabschnitt des Trennbleches verformt und das Trennblech durch die Verformung in der Position kraftschlüssig fixiert ist. Hierdurch erfolgt die Zentrierung des Trennbleches in einfacher Weise durch das Schließen der Gussform, indem die Verfonnungsabschnitte zwischen den Anschlägen verformt und dabei zentriert werden. Das Trennblech wird hierzu zunächst gegen die Anschläge angelegt, die zu diesem Zweck einen konischen Abschnitt oder eine Abschrägung aufweisen. Die Verformung der Verformungsabschnitte erfolgt daher kontinuierlich durch die Bewegung des Trennbleches senkrecht zur Haupterstreckungsebene, bis die gewünschte Sollposition erreicht ist. Eine unerwünschte Verlagerung des Trennbleches aus der so eingestellten Position wird durch die Verformungskräfte verhindert.

Dabei ist es besonders zweckmäßig, wenn das Trennblech elastisch verformt wird, um so erhöhte Fixierkräfte und damit eine weiter verbesserte Positionierung sowie Zentrierung realisieren zu können.

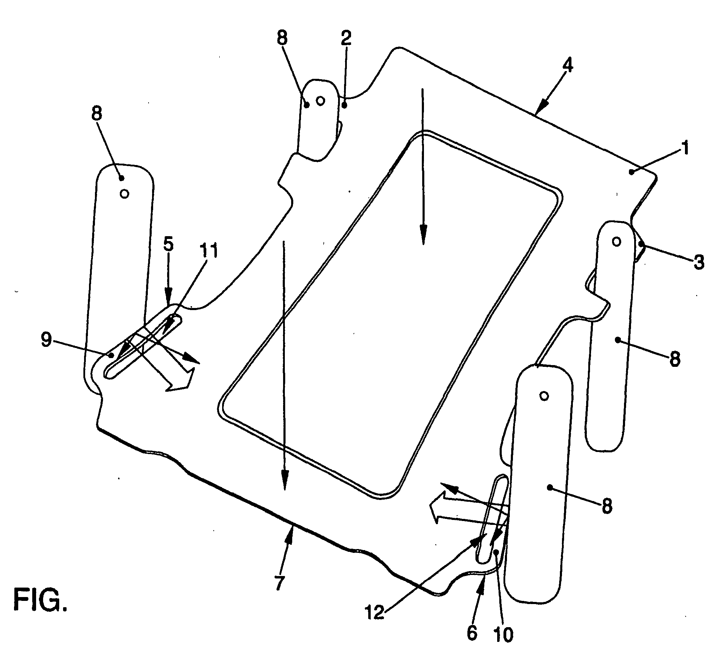

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in einer perspektivischen Ansicht ein erfindungsgemäßes Trennblech 1 für einen nicht dargestellten Gaswechselkanal eines Zylinderkopfes einer Brennkraftmaschine. Das Trennblech 1 weist zwei seitliche, nasenförmige Vorsprünge 2, 3 an einem hinteren Endabschnitt 4 des Trennbleches 1 sowie zwei seitliche Positionierhilfen 5, 6 an einem vorderen Endabschnitt 7 des Trennbleches 1 auf. Bei der Herstellung des Zylinderkopfes einer Brennkraftmaschine im Gießverfahren wird das Trennblech 1 zur Unterteilung eines durch einen Kem gebildeten Gaskanals in die Gussform eingelegt und in den Zylinderkopf eingegossen. Hierzu wird das Trennblech 1 zunächst in eine nicht gezeigte Formhälfte eingelegt, wobei die Vorsprünge 2, 3 und die Positionierhilfen 5, 6 jeweils gegen einen stiftförmigen Anschlag 8 anliegen. Beim Schließen der Gussform wird das Trennblech 1 in die dargestellte Position nach unten bewegt. Dabei werden Verformungsabschnitte 9,10 der Positionierhilfen 5, 6, die jeweils durch eine als Langloch ausgeführte Durchbrechung 11, 12 gebildet sind, derart verformt, dass das Trennblech 1 insbesondere durch eine Rückstellkraft der Verformungsabschnitte 9, 10 zuverlässig in der dargestellten Position zwischen den Anschlägen 8 fixiert und zugleich zentriert ist. Zugleich führt eine resultierende Kraftkomponente zu einer Krafteinleitung, durch die der hintere Endabschnitt 4 in die entsprechende Position der Gussform fixiert wird.

### BEZUGSZEICHENLISTE

- 1: Trennblech
- 2: Vorsprung
- 3: Vorsprung
- 4: hinterer Endabschnitt
- 5: Positionierhilfe

- 6: Positionierhilfe
- 7: vorderer Endabschnitt
- 8: Anschlag
- 9: Verformungsabschnitt
- 10: Verformungsabschnitt

- 11: Durchbrechung
- 12: Durchbrechung

## Patentansprüche

1. Trennblech (1) für einen Gaswechselkanal eines Zylinderkopfes einer Brennkraftmaschine mit beidseitig angeordneten Positionierhilfen, **dadurch gekennzeichnet, dass** die Positionierhilfen (5, 6) einen Verformungsabschnitt (9, 10) zur kraftschlüssigen Fixierung zwischen einem jeweils zugeordneten Anschlag (8) einer Gussform aufweisen.

2. Trennblech (1) nach Anspruch 1, **dadurch gekennzeichnet, dass** der Verformungsabschnitt (9, 10) eine Durchbrechung (11, 12) aufweist.

3. Trennblech (1) nach Anspruch 2, **dadurch gekennzeichnet, dass** die Durchbrechung (11, 12) als Langloch ausgeführt ist.

4. Trennblech (1) nach zumindest einem der vorangehenden Ansprüche, **dadurch gekennzeichnet, dass** der Verformungsabschnitt (9, 10) elastisch verformbar ist.

5. Trennblech (1) nach zumindest einem der vorangehenden Ansprüche, **dadurch gekennzeichnet, dass** der Verformungsabschnitt (9, 10) gegen einen äußeren Umfang des Anschlages (8) flächig anlegbar ist.

6. Trennblech (1) nach zumindest einem der vorangehenden Ansprüche, **dadurch gekennzeichnet, dass** der Verformungsabschnitt (9, 10) gegenüber einer Anlagekante des Trennbleches (1) geneigt angeordnet ist.

7. Verfahren zur Herstellung eines Zylinderkopfes einer Brennkraftmaschine mittels eines Gießverfahrens, wobei ein einen Gaskanal unterteilendes Trennblech in die Gussform eingelegt und mit dem Zylinderkopf durch Eingießen verbunden wird, **dadurch gekennzeichnet, dass** das Trennblech beim Schließen der Gussform in eine gewünschte Position zwischen zwei Anschlägen bewegt wird, derart, dass ein Verformungsabschnitt des Trennbleches verformt und das Trennblech durch die Verformung in der Position kraftschlüssig fixiert ist.

8. Verfahren nach Anspruch 7, **dadurch gekennzeichnet, dass** das Trennblech elastisch verformt wird.

## Claims

1. Partition plate (1) for a gas exchange port of a cylinder head of an internal combustion engine, having positioning aids arranged on both sides, **characterized in that** the positioning aids (5, 6) have a deformation section (9, 10) for fastening in a force-fitting manner between respectively assigned limit stops (8) of a casting mould.

2. Partition plate (1) according to Claim 1, **characterized in that** the deformation section (9, 10) has a through opening (11, 12).

3. Partition plate (1) according to Claim 2,**characterized in that** the through opening (11, 12) is formed as an oblong hole.

4. Partition plate (1) according to at least one of the preceding claims, **characterized in that** the deformation section (9, 10) is elastically deformable.

5. Partition plate (1) according to at least one of the preceding claims, **characterized in that** the deformation section (9, 10) can be placed flat against an outer circumference of the limit stop (8).

6. Partition plate (1) according to at least one of the preceding claims, **characterized in that** the deformation section (9, 10) is arranged at an inclination with respect to a bearing edge of the partition plate (1).

7. Method for producing a cylinder head of an internal combustion engine by means of a casting process, in which a partition plate, which subdivides a gas port, is introduced into the casting mould and connected to the cylinder head by being cast in, **characterized in that** on closing the casting mould the partition plate is moved into a desired position between two limit stops in such a way that a deformation section of the partition plate is deformed and the partition plate is fastened in position in a force-fitting manner as a result of the deformation.

8. Method according to Claim 7, **characterized in that** the partition plate is elastically deformed.

## Revendications

1. Tôle de séparation (1) pour un canal de changement des gaz d'une culasse d'un moteur à combustion interne comprenant des moyens de positionnement disposés de part et d'autre, **caractérisée en ce que** les moyens de positionnement (5, 6) présentent une portion de déformation (9, 10) pour la fixation par force entre une butée respectivement associée (8) d'un moule de coulée.

2. Tôle de séparation (1) selon la revendication 1, **caractérisée en ce que** la portion de déformation (9, 10) présente un orifice (11, 12).

3. Tôle de séparation (1) selon la revendication 2, **caractérisée en ce que** l'orifice (11, 12) est réalisé sous forme de trou oblong.

4. Tôle de séparation (1) selon au moins l'une quelconque des revendications précédentes, **caractérisée en ce que** la portion de déformation (9, 10) est déformable élastiquement.

5. Tôle de séparation (1) selon au moins l'une quelconque des revendications précédentes, **caractérisée en ce que** la portion de déformation (9, 10) peut être appliquée à plat contre une périphérie extérieure de la butée (8).

6. Tôle de séparation (1) selon au moins l'une quelconque des revendications précédentes, **caractérisée en ce que** la portion de déformation (9, 10) est disposée de manière inclinée par rapport à une arête d'appui de la tôle de séparation (1).

7. Procédé de fabrication d'une culasse d'un moteur à combustion interne au moyen d'un procédé de coulage, dans lequel une tôle de séparation divisant un canal de gaz est introduite dans le moule de coulée et est connectée à la culasse par coulage, **caractérisé en ce que** la tôle de séparation est déplacée lors de la fermeture du moule de coulée dans une position souhaitée entre deux butées, de telle sorte qu'une portion de déformation de la tôle de séparation se déforme et que la tôle de séparation soit fixée par force dans la position par la déformation.

8. Procédé selon la revendication 7, **caractérisé en ce que** la tôle de séparation est déformée élastiquement.
